# EUROPEAN PATENT APPLICATION

(11) **EP 2 113 173 A1**
(43) Date of publication of application: **04.11.2009**
(21) Application number: 08172163.1
(22) Date of filing: 18.12.2008
(51) Int. Cl.: A23L 1/00, A23L 1/176, A23L 1/31, A23L 1/315, A23L 1/08, A23L 1/325

(54) **Non fried coated food products and their manufacturing process**

(30) Priority: 21.04.2008 EP 08154867
(71) Applicant: Nestec S.A., 1800 Vevey (CH)
(72) Inventor: Villot, Dominique, 76370 Derchigny Graincourt (FR); Le Gall, Davide, 76310 St Nicolas d'Aliermont (FR)
(74) Representative: Ducreux, Marie

(57) **Abstract**

The invention relates to non fried coated food substrates presenting a bottom side coating composition different from the top side coating composition, where :
- the bottom side coating is a rigid coating in which particles are set, and
- the top side coating is a continuous homogeneous phase issued from the heating of a granular and/or powdered product able to partially or totally melt and/or hydrate through heating.

The invention also relates to a process of preparation of said food products.

## Description

The present invention relates to new non fried coated food products and their process of preparation.

Traditional fried-coated food products such as coated fish, seafood, meat, poultry and vegetables, are very popular both for home and out of home consumption. Traditional coatings are breadcrumbs coating, meunière type or fritter. Consumers like the appearance as well as the fried taste and texture. Nowadays food manufacturers use efficient coating production lines and can propose raw, pre-fried partly cooked or pre-fried and fully cooked coated products at a reasonable price. Pre-fried partly cooked or fully cooked products are especially convenient for out of home caterers: products are easy to handle (the coated portions can directly be laid down in conventional oven trays), are easy to reheat in oven (no losses or jam in oven trays) and easy to serve (individual portions with stable shape).

However these traditional fried foods have most often high fat content and are becoming less acceptable with regards to increased health concerns. For this reason, many manufacturers work to reduce the fat content and modify their processes to limit fat uptake during frying or eliminate the pre-frying steps. However, the possible fat reduction is limited : below 5 to 6 % fat, these traditional products loose palatability and/or attractive appearance thus consumer acceptance. Moreover there is now a bad image regarding fried foods and a general rejection of the consumers for these products even with reduced fat levels. In some countries (for example France), the amount of fried foods which can be served in school canteens and limited.

There is therefore a need for food manufacturers to propose industrial coated food products presenting the advantages of traditional products like good palatability and attractive appearance, and in the same time that respond to today's health concerns, that is to say with no frying step and reduced fat level, and finally that address the expectations of the consumers who reject fried foods and/or the regulatory restrictions regarding fat foods. Yet as traditional fried coated foods, the products need to be efficient and cost effective to produce for the industrial manufacturer and to be highly convenient for the end user (consumer or caterer).

Many popular baked or cooked foods, such as gratins, dishes-in-sauce, dough-based products ... present both good palatability and attractive appearance, and because they are not fried, can respond to today's health concerns but these components are not used as coating for food substrates such as fish, meat, poultry, vegetable for the following reasons. If applied on top or around food substrates, the topped or enrobed foods do not have the advantage and benefits of traditional fried coated food such as production on usual industrial coating lines at high efficiency, easy handling of individual portions, convenient reheating by caterers or consumers in their regular reheating equipment without losses or jam in reheating trays.

The aim of the present invention is to make possible the production of a new range of coated food products by combining the advantages of popular baked or cooked foods that is to say good palability and appearance, and ability to respond to today's health concerns and the advantages of traditional fried coated products, that is to say efficient and cost effective production and high convenience for caterers and/or consumers.

This aim is achieved with the present invention relating to partially or fully cooked non fried coated food products presenting a bottom side coating composition different from the top side coating composition, where :
- the bottom side coating is a rigid coating composed of agglomerated particles, and
- the top side coating is a continuous homogeneous phase issued from the heating of a granular and/or powdered product able to partially or totally melt and/or hydrate through heating.

According to the present invention, the food substrate can be of any nature. It can be selected from fish, seafood, meat, poultry and/or vegetables. It can be natural cuts or formed shapes. The food substrates are coated on all their sides and present an homogeneous external surface aspect. Due to the apparent uniform coating, the products can clearly be identified as belonging to the same food group as the traditional coated products. Yet contrary to usual batter enrobered and bread crumbs coated food products, the products of the present invention are not fried.

Although the products of the present invention present an apparently uniform and homogeneous surface on all their sides, the bottom side coating and the top side coating present different compositions. The vertical sides of the product are generally coated with partly bottom coating and partly top coating. For the products of the present invention, the terms "bottom" and "top" are used to differentiate the natures of the two sides but do not present any signification in term of use, especially when the product is used in a frozen state. In this last case, the product can be reheated either if it lies on its bottom or its top side.

The coating of the bottom side is a continuous rigid coating composed of agglomerated particles. By agglomerated it is meant that the particles are stuck together to form a continuous and rigid coating even when the product is not frozen. The bottom coating is in contact with the food substrate all along the food substrate bottom side. According to the preferred embodiment, the bottom side coating is issued from the heating of a mixture of particles and at least a component able to absorb moisture from the food substrate.

Preferably the particles are selected to be able to provide mechanical rigidity to the product. Optionally, these particles can also present the property to absorb the water released by the food product during cooking. Then they help to avoid the soggy aspect and the dryness of the final bottom coating. Such particles can be selected from, but not limited to :
- bread crumbs, that usually presents the both functions of providing rigidity and absorbing water,
- seeds or roasted seeds that essentially presents the functions of providing rigidity,
- semolina or precooked semolina, that usually presents the both functions of providing rigidity and absorbing water,
- dry vegetable flakes or pieces, that usually presents the both functions of providing rigidity and absorbing water, and mixture thereof. Mixtures enable the combination of particles presenting different functions. The particles preferably present an average diameter comprised between 0,2 and 10 mm, even more preferably between 0,5 and 5 mm, said average granulometry being measured by standard sieving methods. Granulometry can be selected on order to provide the bottom coating with a more or less smooth aspect. For example, a smoother aspect can be get with particles presenting an average diameter comprised between 1,5 and 2 mm.

The component able to absorb moisture from the food substrate can be selected between : starches, hydrocolloids like xanthan gum or cellulose derivatives, flours, fibres and mixture thereof. The components prevent sogginess of the particles ; they are especially useful when the food product presents high water content like fishes or vegetables

The continuous rigid coating of the bottom side is the result of the hydration of the particles and of the component able to absorb moisture with the liquids issued from the food substrate during its heating.

The bottom side coating may also comprise one or several components to improve flavour such as, but not limited to, spices, salt, taste enhancers (such as monosodium glutamate, ribotides, yeasts extracts,...), flavourings, colours (such as paprika, curcuma,...) or coloring matters (such as beta carotene,...) and/or components to improve texture such as cheese, grains or nuts.

As for the top side coating, it presents a typical baked or cooked appearance, i.e. a culinary aspect usually browned-on-top. It can be the oven baked or cooked appearance of a sauce topping - e.g. tomato or cheese sauce or white sauce or gratin type product. The baked or cooked appearance of the top coating is generally issued from an oven baking of at least one component selected from, but not limited to, a blend of powders, a blend of particles or a mixture thereof. Preferably, the top side coating is issued from the melting or/and hydration of a granular and/or powdered product further to heating. It presents the form of a continuous homogeneous phase. By continuous homogeneous phase, it is meant that the phase is totally homogeneous in composition through all the top side of the product, contrary to the bottom side coating that is an agglomeration of individual particles.

The granular and/or powdered product from which is issued the top side coating can comprise grated cheese or pieces of cheese, dehydrated or partially dehydrated vegetables or fruits, dehydrated dairy products, starches, dehydrated sauce fixes, flavours and mixtures thereof. It can also comprise wheat flour, proteins, semolina, grains and mixtures thereof.

According to a first preferred embodiment of the present invention, the top side coating can be issued from the melting and the hydration of a granular and powdered mixture of at least dehydrated dairy powder products and pieces of cheese. According to this first preferred embodiment, the top side coating can be issued from the heating of a granular and powdered product comprising grated cheese with starches, dairy protein and spices. This composition melts and hydrates during heating to form a homogeneous continuous layer of thick cheese sauce.

According to another embodiment of the present invention, the top side coating can be issued from the hydration of at least a dehydrated powder sauce, for example a dehydrated tomato sauce. According to this second preferred embodiment, the top side coating is issued from the heating of a granular and/or powdered product comprising a dehydrated sauce mix that hydrates during heating to form a continuous homogeneous sauce phase.

According to a first mode of the present invention, the products of the present invention can be totally cooked. They can then be frozen or chilled and are ready to be reheated before consumption. This first mode is preferred. According to a second mode, the products of the present invention can be only partially cooked. They are ready for finish baking and consumption. They can be frozen or chilled. According to the preferred embodiment of the present invention, the products are usually sold frozen.

The products of the present invention have the advantage of being easily reheated on a standard oven plate without any need for extra oven dish or tray. The products of the present invention have the advantage of being easily reheated without any added fat. They do not stick to the reheating support and keep their initial shape. During reheating, they can indifferently lie on the top or on the bottom side especially if they are frozen.

The invention relates too to a process for the manufacture of the above product where :
- the food product is coated with batter,
- the batter coated food product is coated on its bottom side by a mixture of particles and at least a component able to absorb moisture,
- the batter coated food product is coated on its top side by the granular product able to partially or totally melt or/and hydrate through heating to form a homogeneous continuous phase,
- the coated food product is partially or fully baked in an oven.

The first step of implementation of the process consists in coating the food products with a liquid batter so that the products are at least partially coated with this liquid. This liquid can be any liquid batter known by the practitioners for coating food products. It may comprise any typical batter ingredients e.g. water, flour, salt, starches, dextrines, egg whites, ... and mixture thereof. This second step can be made in a standard battering machine. The starting food product can be frozen, especially if it is fish, which facilitates the handling process.

Before the first step of implementation of the process of the invention, the food products can be predusted with a powder so that the substrates are at least partially coated with this powder. This powder can be any dusting mix known by the practitioners for the general process of dusting food products like flour or starch. This step can be made in a standard mechanical duster. This step is facultative.

The second step consists in coating the batter coated food product on its bottom side, by putting the batter enrobed food product on a belt covered by a bed of a mixture of particles and at least a component able to absorb moisture.

The third step consists in coating the top side of the batter coated food product by spraying the granular product above the batter coated food product. The granular product can be coated on the batter coated food products with a conventional industrial coating equipment such a breader, duster, particulates fall applicator.

An optional step consists in spraying or applying by dipping a glazing that can be composed of a hydrocolloid solution on the product surface to create a layer to prevent leakage of top coating material during baking. It can consist in a solution containing 0,5 to 2 % w/w pectin gums.

In the last step the coated food substrate is partially or fully baked in an oven during a time and at a temperature such that the granular product melts and/or hydrates to form a continuous homogeneous phase such as liquid or thick sauce. When cheese is melted in the sauce, the surface gets browned on top. During the baking, the top side is placed above the bottom side, the bottom side laying on a support. The top side can be saucy or soft and do not deform or get flattened as it is not in contact with the oven support. The baking conditions are established to obtain a gratinated, saucy, crusty aspect of the top side of the products. Yet, the inside product can be only partially cooked.

Usually, once baked, the food products are frozen or chilled for commercialization.

The process of the present invention has the advantage of providing healthy oven baked food products presenting an apparent homogeneous coating similar to fried coated products and with high palatability and visual attraction. The process gives also the advantage of being able to manufacture such products cost effectively by using a conventional industrial coating line requiring no new investments or developments. Actually, the fact that the process uses only components in the form of granulates, powders, particles, for crumbs or flour applicator or liquid for batter applicator to coat the food substrates enable the use of conventional coating lines. Finally when the product is frozen, it can be easily manipulated and reheated on whatever side without risk to damage the coatings and without influence on the final aspect of the reheated product, which is an advantage for cookers in out of home area who manipulate a high quantity of products.

### EXAMPLE : fully cooked gratinated cheese coated fish

70 g of frozen white fish portions are produced by sawing a frozen fish block. Portions are shaped as rectangles with a thickness of about 15 mm. The frozen fish portions are predusted with flour in a conventional flour applicator. A batter prepared in an entirely conventional manner by using 35 kg of batter powder (composed of wheat flour, potato starch, salt and xanthane gel) and 65 kg of water is applied on the predusted fish portions in a conventional way.

The bottom coating mix is prepared in conventional mixing equipment (e.g. a bowl chopper) by mixing :
- 29 % in weight grated emmenthal cheese to reinforce bottom side cohesion.
- 69 % in weight conventional bread crumbs,
- 2 % in weight wheat fibres to adsorb water and prevent crumbs sogginess.

A crumb applicator is loaded with the bottom mix. The bottoms of the battered fish portions are then coated by running through the crumb applicator in which the return from hoper is deviated in a way not to fall on top of the battered fish portion.

The top mix is prepared in a conventional mixing equipment (e.g. a bowl chopper) by mixing :
- 55 % in weight grated emmenthal cheese,
- 23 % in weight modified starch,
- 8 % in weight wheat flour (type 55),
- 5 % in weight skim milk powder,
- 5 % in weight cream powder,
- 2 % in weight salt,
- 3 % in weight spices and flavours.

A conventional flour applicator is loaded with the top mix. The battered bottom coated fish portion is coated by running through the flour applicator.

The coated fish portion with different coatings on top and bottom is cooked in a hot air oven (7 min at 220°C), the bottom coated side lying on the oven plate, in order to cook the fish portion and to produce a well developed gratinated cheese sauce on top. Then the gratinated portions are frozen to -25°C through a freezing tunnel in agreement with entirely conventional methods and apparatus. The frozen gratinated portions are stored frozen until reheating and consumption.

The coated frozen products presents the same convenience as standard pre-fried coated products easy to handle. For consumption, the frozen gratinated fish portions are reheated in oven at 170°C during 15 minutes. During reheating the portions can lie on their bottom or top coating side. The frozen gratinated fish portions can also be reheated in differed kitchen conditions, for example they can be tempered and reheated at 120°C for 20 minutes in aluminium or polypropylene trays.

After reheating, the products have the appearance of traditional fried coated fish portions though it doesn't present a high fat content. The coating has good palability due to the unctuous gratinated cheese sauce on one side of the product.

## Claims

1. Partially or fully cooked non fried coated food product presenting a bottom side coating composition different from the top side coating composition, where :
- the bottom side coating is a rigid coating composed of agglomerated particles, and
- the top side coating is a continuous homogeneous phase issued from the heating of a granular and/or powdered product able to partially or totally melt and/or hydrate through heating.

2. Partially or fully cooked non fried coated food product according to Claim 1 where the food substrate is selected from fish, seafood, meat, poultry and/or vegetables.

3. Partially or fully cooked non fried coated food product according to Claim 1 or 2 where the bottom side coating is issued from the heating of a mixture of particles and at least a component able to absorb moisture from the food substrate.

4. Partially or fully cooked non fried coated food product according to any of the preceding claims, where the particles of the bottom side coating are selected from bread crumbs, seeds, roasted seeds, semolina, precooked semolina, dry vegetable flakes or pieces and mixture thereof.

5. Partially or fully cooked non fried coated food product according to any of the preceding claims, where the particles of the bottom side coating present an average diameter comprised between 0,2 and 10 mm, preferably between 0,5 and 5 mm.

6. Partially or fully cooked non fried coated food product according to any of claims 3 to 5, where the component able to absorb moisture from the food substrate can be selected between : starches, hydrocolloids, flours, fibres and mixture thereof.

7. Partially or fully cooked non fried coated food product according to any of the precedent claims where the top side coating is issued from the melting and the hydration of a granular and powdered mixture of at least a dehydrated dairy powder product and pieces of cheese.

8. Partially or fully cooked non fried coated food product according to any of the claims 1 to 6 where the top side coating is issued from the hydration of at least a dehydrated powder sauce.

9. Partially or fully cooked non fried coated food product according to any of the precedent claims where it is frozen or chilled.

10. Partially or fully cooked non fried coated food product according to Claim 1, where :
- the bottom side coating is issued from the heating of a mixture of bread crumbs and flour, and
- the top side coating is issued from the heating of a granular and/or powdered mixture of grated cheese, starches, dairy protein and spice.

11. Process for the manufacture of a cooked non fried coated food product according to any of claims 1 to 11 where :
- the food product is coated with a batter,
- the batter coated food product is coated on its bottom side by a mixture of particles and at least a component able to absorb moisture,
- the batter coated food product is coated on its top side by a granular product able to partially or totally melt and/or hydrate through heating to form a continuous phase,
- the coated food substrate is partially or fully baked in an oven.

12. Process according to Claim 11 where the batter coated food product is coated on its bottom side by putting the batter coated food product on a belt covered by a bed of a mixture of particles and at least a component able to absorb moisture.

13. Process according to Claim 11 or 12 where the batter coated food product is coated on its top side by spraying the granular product above the batter coated food product.

14. Process according to any of Claims 11 to 13 where the baked coated food product is frozen or chilled.
